# DEMANDE DE BREVET EUROPEEN

(11) **EP 0 763 911 A1**
(43) Date de publication de la demande: **19.03.1997**
(21) Numéro de dépôt: 96401945.9
(22) Date de dépôt: 12.09.1996
(51) Int. Cl.: H04J 3/16

(54) **Trame de transmission à haute efficacité**

(30) Priorité: 13.09.1995 FR 9510730
(71) Demandeur: ALCATEL MOBILE PHONES, 75015 Paris (FR)
(72) Inventeur: Dupuy, Pierre, 75017 Paris (FR)
(74) Mandataire: Pothet, Jean Rémy Emile Ludovic

(57) **Abrégé**

Une trame de transmission comprend un motif de référence (00...0, 1, 1,...1) et des bits d'information (B1, ..., B143), le motif de référence déterminant de manière univoque l'identité de ces bits d'information.

De plus, cette trame est formée de plusieurs sous-trames synchronisées (ST1, ST2), une de ces sous-trames (ST2) comprenant uniquement des bits d'information (B64, ..., B143).

Emetteur et récepteur prévus pour une telle trame.

## Description

Dans un système de communication synchrone entre équipements de traitement de données, une des méthodes les plus couramment utilisées pour envoyer des messages consiste à définir une structure de trame caractérisée par
- un drapeau de synchronisation,
- un codage particulier des informations utiles à transmettre, tel que le drapeau de synchronisation ne puisse jamais être reconnu au milieu du train de données transmises.

Une des façons les plus connues pour mettre en oeuvre ce procédé consiste à choisir un drapeau qui est une suite constante de P zéros suivis d'un '1'. Le codage de l'information consiste alors simplement à insérer un '1' chaque fois qu'une suite de (P-1) '0' a été transmise. Par exemple, si le drapeau est '00001' le message '0010 0000 10' sera transmis sous la forme : '00001 0010 00100 10'. Les chiffres soulignés correspondent au drapeau de synchronisation, et au '1' inséré (les espaces n'ont pas d'autre rôle que de faciliter la lecture).

Cette méthode souffre toutefois d'un défaut : le temps de transmission d'un message dépend de son contenu, ce qui est très gênant lorsqu'on souhaite assurer un délai fixe d'acheminement.

La solution connue à ce problème consiste à insérer un '1' tous les (P-1) bits d'information transmis : on est ainsi sûr qu'on ne rencontrera jamais P zéros successifs et le temps de transmission est toujours le même quel que soit l'information à transmettre. Un exemple bien connu de ce procédé est celui des trames V110 définies par le CCITT (Comité Consultatif International du Téléphone et du Télégraphe) maintenant dénommé ITU (International Telecommunication Union). Elle sont constituées d'un drapeau de huit zéros suivi d'un '1', un '1' étant ensuite inséré tous les 7 bits pour former une trame de 80 bits, 17 bits étant utilisés pour la synchronisation et 63 pour les informations.

On peut ainsi représenter une trame par un tableau à P colonnes et L lignes. La première ligne que l'on conviendra d'appeler ligne de verrouillage comporte P zéros et les lignes suivantes que l'on nomme lignes de données comprennent chacune un bit de synchronisation qui vaut '1' suivi de (P-1) bits d'informations.

Par convention, l'association de la ligne de verrouillage et des bits de synchronisation forme un motif de référence.

Dès lors, il est possible de définir l'efficacité de la trame comme le rapport du nombre de bits d'information au nombre total de bits de la trame.

Cette efficacité sera d'autant meilleure que le nombre de bits du motif de référence sera faible.

Il va sans dire que la recherche d'une efficacité maximale constitue une préoccupation constante de l'homme du métier.

On rappelle que le motif de référence, notamment la ligne de verrouillage, a pour fonction de déterminer sans ambiguïté la position des bits d'information. Ainsi, un récepteur qui reçoit une suite de bits va rechercher la ligne de verrouillage suivie d'un bit de synchronisation et, lorsque cette opération sera réalisée, il pourra identifier le premier bit qui suit come le premier bit d'information et identifier de même la totalité des bits d'information selon leur position par rapport à la ligne de verrouillage.

L'invention vise des trames particulières qui sont constituées de sous-trames synchronisées. On se réferera à titre d'exemple à la recommandation I.460 éditée par le CCITT. Dans ce document il est prévu d'effectuer une transmission au moyen d'intervalles de temps de 8 emplacements chacun prévu pour acheminer un bit, chaque emplacement correspondant à un débit global de 8 kbit/s. On peut donc acheminer une sous-trame au moyen d'un emplacement déterminé. Une trame correspondant à un débit de 16 kbit/s sera transmise au moyen de deux sous-trames utilisant des emplacements généralement consécutifs. Une trame correspondant à un débit de 32 kbit/s sera composée de quatre sous-trames et une trame de 64 kbits/s sera formée de huit sous-trames.

Les sous-trames sont synchronisées c'est-à-dire qu'à la suite d'une transmission, les bits reçus dans les différents emplacements le sont dans l'ordre où ils y ont été placés à l'émission.

En d'autres termes, si on considère une trame de 16 kbit/s formée de deux sous-trames, la première sous-trame véhiculée sur le premier emplacement comprend les bits de rang impair de cette trame tandis que la deuxième sous-trame véhiculée sur le deuxième emplacement comprend les bits de rang pair de cette trame.

Le bit de rang n (n pair) ou nième bit de la trame qui correspond au bit de rang n/2 de la deuxième sous-trame étant émis immédiatement après le (n-1)ième bit de la trame qui correspond au bit de rang n/2 de la première sous-trame, cet ordre est respecté à la réception.

Il s'ensuit que la position des bits de la deuxième sous-trame se déduit directement de celle des bits de la première sous-trame, deux bits reçus successivement dans deux emplacements consécutifs occupant le même rang au sein des sous-trames correspondantes.

L'invention propose d'optimiser l'efficacité de telles trames composées de sous-trames synchronisées.

Dans ce but, une trame de transmission comprend un motif de référence et des bits d'information, le motif de référence déterminant de manière univoque l'identité des bits d'information et, cette trame étant formée de plusieurs sous-trames synchronisées, une de ces sous-trames comprend uniquement des bits d'information.

En effet, la position des bits d'information d'une sous-trame identifiée se déduit directement de la position des bits de l'une quelconque des autres sous-trames.

Ainsi, les bits du motif de référence qui selon la structure d'une trame V110 figuraient dans cette sous-trame identifiée ne sont plus d'aucune utilité, si bien qu'ils peuvent être remplacés par des bits d'information.

L'efficacité de la trame se voit accrue en conséquence.

Avantageusement, dans cette trame de transmission, le motif de référence est inclus dans une seule sous-trame.

Par ailleurs, il serait souhaitable de pouvoir utiliser les trames objet de l'invention avec les équipements de l'état de l'art prévu pour fonctionner avec des trames de type V110.

On précise ici que si les bits du motif de référence ont une valeur constante, les bits d'information sont quant à eux variables par nature puisqu'ils transmettent de l'information. Cette information peut consister soit en des données proprement dites soit en des messages de signalisation caractérisant ces données ou destinés à la commande des équipements de transmission. On pense par exemple à la nature des données (parole ou autre), à l'identification d'un codage qui a été appliqué à ces données, à une commande de décalage temporel etc. On prévoit donc dans la trame au moins un champ de commande formé de bits d'information pour la transmission de ces messages de signalisation.

Selon une caractéristique additionnelle, la trame de l'invention comprend un champ de commande formé par certains bits d'information, ce champ de commande étant affecté d'une valeur telle que l'association du motif de référence et de ce champ de codage définisse une séquence d'identification ne pouvant apparaître ailleurs dans la trame.

La séquence d'identification joue un rôle équivalent à celui du drapeau de synchronisation d'une trame V110.

Une solution élégante consiste à prévoir l'identité de cette séquence d'identification et du drapeau de synchronisation des trames déjà en cours d'utilisation de sorte qu'il n'est point besoin de modifier les équipements de réception qui sont en service.

L'invention concerne également les équipements de transmission adaptés à ces trames. Les modifications nécessaires de ces équipements sont réellement mineures et immédiatement accessibles à l'homme du métier. En effet, la réalisation d'un émetteur prévu pour formater une trame avec un drapeau de synchronisation et des bits de synchronisation de même que celle d'un récepteur prévu pour identifier un drapeau de synchronisation et des bits de synchronisation dans une suite de bits reçus font partie de l'état de l'art.

Ainsi, un récepteur pour la mise en oeuvre de l'invention est adapté à la réception d'une trame de transmission formée de plusieurs sous-trames, ces sous-trames étant véhiculées sur des sous-canaux distincts. Il comprend un analyseur connecté à un sous-canal déterminé pour établir un signal de validation à la reconnaissance d'un motif de référence et des moyens pour restituer cette trame à partir des sous-canaux en réponse au signal de validation.

De même, conformément à l'invention, un émetteur comprend des moyens d'émission d'une trame de transmission formée de plusieurs sous-trames synchronisées, cette trame comprenant un motif de référence et des bits d'information, le motif de référence déterminant de manière univoque l'identité des bits d'information. Il comprend de plus des moyens pour formater une de ces sous-trame dite sous-trame d'information de sorte qu'elle comprenne uniquement des bits d'information.

Selon un mode de réalisation préféré, l'émetteur comprend des moyens pour formater une autre sous-trame de sorte que le motif de référence y soit intégralement inclus.

Suivant une caractéristique additionnelle de l'émetteur, la trame comprenant un champ de commande formé par certains bits d'information, il comprend des moyens pour affecter à ce champ de commande une valeur telle que l'association du motif de référence et de ce champ de commande définisse une séquence d'identification ne pouvant apparaître ailleurs dans la trame.

Là aussi, on pourra prévoir que l'émetteur soit adapté de manière que la séquence d'identification corresponde à un drapeau de synchronisation adapté à cette trame.

L'invention apparaîtra maintenant de manière plus précise dans le cadre de la description d'exemples de réalisation en référence aux figures annexées qui représentent :
- la figure 1, une première sous-trame selon l'invention,
- la figure 2, une seconde sous-trame selon l'invention,
- la figure 3, une trame formée par les première et seconde sous-trames,
- la figure 4, une configuration particulière de cettte seconde sous-trame,
- la figure 5, le schéma d'un récepteur selon l'invention,
- la figure 6, le schéma d'un émetteur selon l'invention.

Les éléments présents dans différentes figures seront affectés d'une seule référence.

On considère le cas d'une trame formée de deux sous-trames.

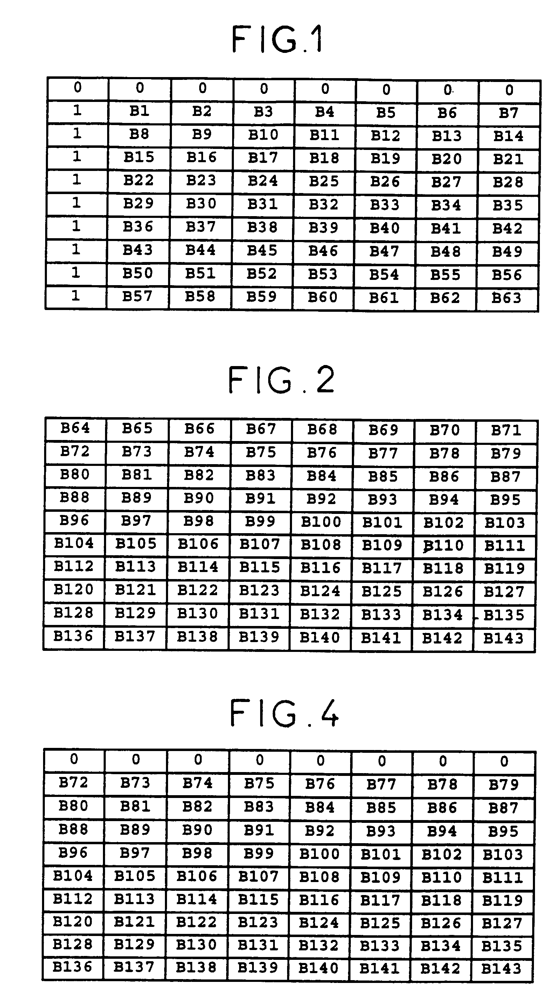

En référence à la figure 1, une première sous-trame comprend :
- une ligne de verrouillage formée de huit '0',
- une première ligne de données comprenant un bit de synchronisation à '1' et sept bits d'information B1 à B7,
- une seconde ligne de données comprenant un bit de synchronisation à '1' et les sept bits d'information suivants B8 à B14,
- une troisième ligne de données comprenant un bit de synchronisation à '1' et les sept bits d'information suivants B15 à B21, et ainsi de suite jusqu'à
- une neuvième ligne de données comprenant un bit de synchronisation à '1' et les sept derniers bits d'informations B57 à B63.

L'association du drapeau de synchronisation et des bits de synchronisation forment un motif de référence.

La seconde sous-trame, en référence à la figure 2, comprend 10 lignes de données comprenant chacune huit bits d'information. Ainsi, la première ligne de données comprend les bits d'information B64 à B71, la seconde, les bits d'information B72 à B79, et ainsi de suite jusqu'à la dixième qui comprend les bits d'information B137 à B143.

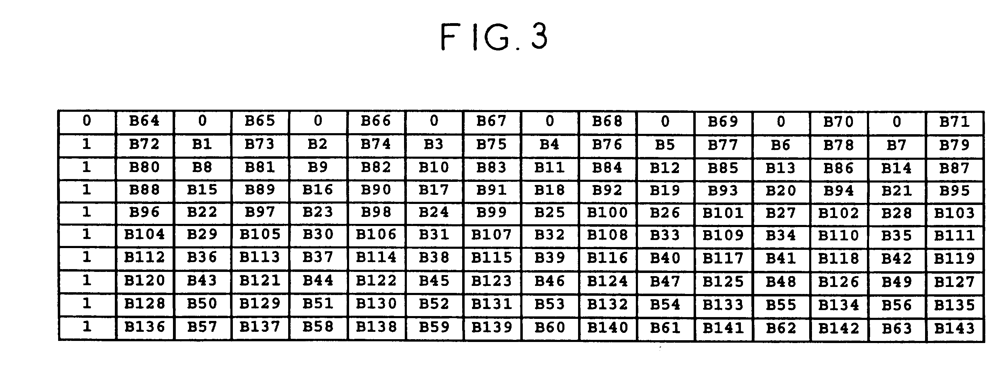

En référence à la figure 3, la trame est formée en alternant les bits successifs de la première et de la deuxième sous-trame, les bits de rang impair de la trame correspondant à ceux de la première sous-trame et les bits de rang pair de la trame correspondant à ceux de la deuxième sous-trame.

On s'aperçoit par ailleurs que le format de la première sous-trame correspond à celui d'une trame V110 si bien qu'il n'est pas nécessaire de plus détailler le mode d'utilisation de cette sous-trame.

De plus, les sous-trames étant synchronisées, l'ordre des bits sera toujours celui qui a été précisé en référence à la figure 3. Ainsi l'identification de la première sous-trame au moyen du motif de référence détermine de facto l'identification de la deuxième sous-trame.

De ce fait, les bits B64 à B71 de la première ligne de données de la seconde sous-trame qui auraient été à "0" en employant une méthode de synchronisation classique telle que celle décrite dans la recommandation 08.60 du GSM sont ici récupérés en tant que bits d'information.

Une solution avantageuse consiste à définir un champ de commande au moyen de ces bits B64 à B71.

En effet, la trame selon l'invention présente un avantage supplémentaire si elle peut être utilisée avec les équipements déjà installés.

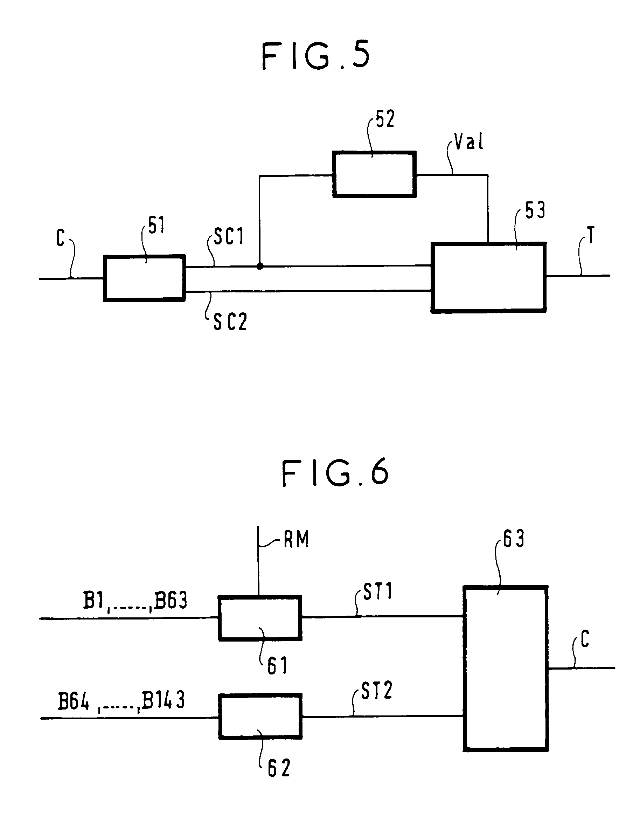

En référence à la figure 4, on réserve donc une valeur particulière de ce champ de commande qui permet d'assurer la compatibilité avec ces équipements, valeur qui correspond au positionnement de chacun des bits B64 à B71 à "0".

Au moyen de cette opération on rétablit la structure connue du type V110 pour la trame car l'association du drapeau de synchronisation de la première sous-trame et du champ de commande de la seconde sous-trame lorsque tous ses bits sont à '0' définit une séquence d'identification qui correspond au drapeau de synchronisation d'une trame V110.

Naturellement, des autres valeurs de ce champ seront attribuées pour les systèmes permettant la mise en oeuvre de l'invention, ces valeurs permettant de spécifier divers paramètres des données transmises comme cela a déjà été mentionné.

Un récepteur de l'état de l'art prévu pour recevoir des trames de type V110 comprend un analyseur prévu pour identifier le drapeau de synchronisation et les bits de synchronisation dans une suite de bits qu'il reçoit par un canal de transmission.

Lorsqu'il a reconnu ce motif, il produit un signal de validation qui indique pour les bits reçus dans un registre leur position respective dans la trame, ce qui permet ainsi de restituer la trame.

Un récepteur pour la mise en oeuvre de l'invention est très proche du récepteur de l'état de l'art dont le fonctionnement est succinctement rappelé ci-dessus.

En référence à la figure 5, le canal C de transmission est subdivisé en un premier SC1 et un second SC2 sous-canaux au moyen d'un démultiplexeur 51. Le premier sous-canal SC1 correspond à un premier emplacement de l'intervalle de temps sur lequel est émis la première sous-trame tandis que le second sous-canal SC2 correspond à un second emplacement de l'intervalle de temps sur lequel est émis la seconde sous-trame.

L'analyseur 52 reçoit ici le premier sous-canal SC1 et produit un signal de validation lorsqu'il a reconnu le motif de référence.

Le récepteur comprend enfin des moyens 53 pour recombiner la trame au moyen des bits reçus par le premier SC1 et le second SC2 sous-canaux. Ces moyens consistent essentiellement à enregistrer les bits reçus en leur affectant un numéro d'ordre. Le signal de validation indique la relation entre la position d'un bit particulier dans la trame et son numéro d'ordre si bien que, les bits étant reçus dans l'ordre où ils ont été émis, la position de chacun des bits est connue et il est ainsi possible de reconstituer la trame T.

Un émetteur de l'état de l'art prévu pour transmettre des trames de type V110 comprend un formateur pour introduire dans un registre représentant la trame, d'une part les bits du drapeau de synchronisation et les bits de synchronisation et d'autre part des bits d'information.

Un émetteur pour la mise en oeuvre de l'invention est très proche de l'émetteur de l'état de l'art dont le fonctionnement est succinctement rappelé ci-dessus.

En référence à la figure 6, cet émetteur comprend un premier formateur 61 qui produit la première sous-trame ST1 à partir des bits RM du motif de référence et des bits d'information B1 à B63. Il comprend également un second formateur 62 pour produire la seconde sous-trame ST2.

Ce second formateur 62 est extrêmement simple puisqu'il se contente de positionner les bits d'information B64 à B143 dans l'ordre prescrit.

L'émetteur comprend également des moyens de transmission 63 recevant la première ST1 et la seconde ST2 sous-trames pour les acheminer respectivement sur un premier et un second emplacement de l'intervalle de temps qui définissent le canal de transmission C.

Jusqu'à présent, on a considéré que la trame comportait seulement deux sous-trames, ceci afin de rendre l'exposé le plus clair possible.

Naturellement, l'invention s'applique également lorsque la trame comporte plus de deux sous-trames.

Dans ce cas une solution avantageuse consiste à disposer le motif de référence dans une seule sous-trame et à réserver les autres sous-trames pour la transmission exclusive de bits d'information. Cependant, rien n'interdit de répartir le motif de référence sur plusieurs sous-trames. En effet l'invention offre la possibilité d'augmenter le nombre de bits d'information par rapport à l'état de l'art. Elle vise donc également le cas où une seule sous-trame est affectée à l'usage exclusif des bits d'information.

Les adaptations nécessaires des équipements lorsque la trame comprend plus de deux sous-trames, qu'il s'agisse du récepteur ou de l'émetteur, ne seront pas détaillées. En effet, au vu de l'état de l'art et des indications données plus haut, ces adaptations apparaissent comme immédiates à l'homme du métier.

## Revendications

1. Trame de transmission comprenant un motif de référence (00...0, 1, 1,...1) et des bits d'information (B1, ..., B143), le motif de référence déterminant de manière univoque l'identité desdits bits d'information, caractérisée en ce que, formée de plusieurs sous-trames synchronisées (ST1, ST2), une desdites sous-trames (ST2) comprend uniquement des bits d'information (B64, ..., B143).

2. Trame de transmission selon la revendication 1, caractérisée en ce que ledit motif de référence (00...0, 1, 1,...1) est inclus dans une seule sous-trame (ST1).

3. Trame de transmission selon l'une quelconque des revendications 1 ou 2 caractérisée en ce que, comprenant un champ de commande (B64, ..., B71) formé par certains desdits bits d'information, ce champ de commande est affecté d'une valeur (00...0) telle que l'association dudit motif de référence et de ce champ de commande définisse une séquence d'identification ne pouvant apparaître ailleurs dans ladite trame.

4. Trame de transmission selon la revendication 3, caractérisée en ce que ladite séquence d'identification correspond à un drapeau de synchronisation adapté à cette trame.

5. Récepteur adapté à la réception d'une trame de transmission (T) formée de plusieurs sous-trames (ST1, ST2), lesdites sous-trames étant véhiculées sur des sous-canaux distincts (SC1, SC2), caractérisé en ce qu'il comprend un analyseur (52) connecté à un sous-canal déterminé (SC1) pour établir un signal de validation (Val) à la reconnaissance d'un motif de référence (00...0, 1, 1,...1) et des moyens (53) pour restituer ladite trame (T) à partir desdits sous-canaux en réponse audit signal de validation.

6. Emetteur comprenant des moyens d'émission (63) d'une trame de transmission (T) formée de plusieurs sous-trames (ST1, ST2) synchronisées, cette trame comprenant un motif de référence (00...0, 1, 1,...1) et des bits d'information (B1, ..., B143), le motif de référence déterminant de manière univoque l'identité desdits bits d'information, caractérisé en ce qu'il comprend des moyens (62) pour formater une desdites sous-trame (ST2) dite sous-trame d'information de sorte qu'elle comprenne uniquement des bits d'information.

7. Emetteur selon la revendication 6 caractérisé en ce qu'il comprend des moyens (61) pour formater une autre sous-trame (ST1) de sorte que ledit motif de référence y soit intégralement inclus.

8. Emetteur selon l'une quelconque des revendications 6 ou 7 caractérisé en ce que, ladite trame d'information comprenant un champ de commande (B64,..., B71) formé par certains desdits bits d'information, il comprend des moyens pour affecter à ce champ de commande une valeur (00...0) telle que l'association dudit motif de référence et de ce champ de commande définissent une séquence d'identification ne pouvant apparaître ailleurs dans ladite trame (T).

9. Emetteur selon la revendication 8, caractérisé en ce que ladite séquence d'identification correspond à un drapeau de synchronisation adapté à cette trame.
